# EUROPÄISCHE PATENTANMELDUNG

(11) **EP 4 417 371 A1**
(43) Veröffentlichungstag der Anmeldung: **21.08.2024**
(21) Anmeldenummer: 23156631.6
(22) Anmeldetag: 14.02.2023
(51) Int. Cl.: B25F 5/00, B23B 51/04, B28D 1/04

(54) **WERKZEUGMASCHINE MIT EINEM WERKZEUG UND VERFAHREN ZUM BETRIEB DER WERKZEUGMASCHINE**

(71) Anmelder: Hilti Aktiengesellschaft, 9494 Schaan (LI)
(72) Erfinder: Wierer, Michael, 6832 Röthis (AT); Golubovic, Goran, 86807 Buchloe (DE); Rank, Markus, 86807 Buchloe (DE)
(74) Vertreter: Hilti Aktiengesellschaft Corporate Intellectual Property

(57) **Zusammenfassung**

Die vorliegende Erfindung betrifft eine Werkzeugmaschine mit einem Werkzeug, wobei das Werkzeug mit Hilfe einer Werkzeugaufnahme mit der Werkzeugmaschine verbindbar ist, die Werkzeugmaschine einen Motor zur Erzeugung eines Drehmoments aufweist und wobei das Drehmoment mit Hilfe eines Antriebsstrangs der Werkzeugmaschine an die Werkzeugaufnahme übertragbar ist. In dem Antriebsstrang ein Spiel vorgesehen, wobei ein Sollstrom für den Motors der Werkzeugmaschine mit sich regelmäßig abwechselndem Vorzeichen vorgegeben werden kann, wobei eine Frequenz für den Wechsel des Vorzeichens des Motorsollstroms in einem Bereich von 7 bis 60 Hertz liegt. In einem zweiten Aspekt betrifft die Erfindung ein Verfahren zum Betrieb der Werkzeugmaschine, wobei ein Motorsollstrom mit einer Frequenz in einem Bereich von 7 bis 60 Hertz vorgegeben wird, so dass ein Drehmoment in unterschiedlichen Drehrichtungen von dem Motor an die Werkzeugaufnahme der Werkzeugmaschine übertragen wird und ein verklemmtes Werkzeug aus einem Bohrloch gelöst werden kann.

## Beschreibung

Die vorliegende Erfindung betrifft eine Werkzeugmaschine mit einem Werkzeug, wobei das Werkzeug mit Hilfe einer Werkzeugaufnahme mit der Werkzeugmaschine verbindbar ist, die Werkzeugmaschine einen Motor zur Erzeugung eines Drehmoments aufweist und wobei das Drehmoment mit Hilfe eines Antriebsstrangs der Werkzeugmaschine an die Werkzeugaufnahme übertragbar ist. In dem Antriebsstrang ist ein Spiel vorgesehen, wobei ein Sollstrom für den Motors der Werkzeugmaschine mit sich regelmäßig abwechselndem Vorzeichen vorgegeben werden kann, wobei eine Frequenz für den Wechsel des Vorzeichens des Motorsollstroms in einem Bereich von 7 bis 60 Hertz liegt. In einem zweiten Aspekt betrifft die Erfindung ein Verfahren zum Betrieb der Werkzeugmaschine, wobei ein Motorsollstrom mit einer Frequenz in einem Bereich von 7 bis 60 Hertz vorgegeben wird, so dass ein Drehmoment in unterschiedlichen Drehrichtungen von dem Motor an die Werkzeugaufnahme der Werkzeugmaschine übertragen wird und ein verklemmtes Werkzeug aus einem Bohrloch gelöst werden kann. Beispielsweise kann die Erfindung auch verwendet werden, um einen verklemmten Bohrkern aus einer Bohrkrone zu lösen.

### Hintergrund der Erfindung:

Im Stand der Technik sind Kernbohrgeräte bekannt, mit denen zylinderförmige Bohrkerne aus festen Untergründen, wie Beton, Mauerwerk oder Stein, herausgeschnitten werden können. Kernbohrgeräte weisen als Werkzeug eine im Wesentlichen zylinderförmige Bohrkrone auf, die in ihrem Inneren hohl ist, um den Bohrkern aufzunehmen. Der Nutzer eines Kernbohrgeräts weiß aus Erfahrung, dass es eine Herausforderung darstellen kann, den Bohrkern aus der Bohrkrone zu entfernen, wenn die Bohrung erfolgreich beendet ist und der Bohrkern aus dem Untergrund herausgeschnitten wurde. Darüber hinaus kann es schwierig sein, eine verklemmte Bohrkrone aus einem Bohrloch zu entfernen. Häufig ergibt sich das Problem, dass das Lösen des Bohrkerns aus der Bohrkrone oder das Entfemen der Bohrkrone aus dem Bohrloch eine längere Zeit in Anspruch nimmt als die Durchführung der Kembohrung selbst.

Im Stand der Technik ist beispielsweise bekannt, den Bohrkern mit mechanischen Mitteln aus der Bohrkrone bzw. die Bohrkrone aus einem Bohrloch zu entfernen. Dazu wird beispielsweise die Bohrkrone vom Kernbohrgerät getrennt und es wird versucht, den Bohrkern durch Rütteln oder Hämmern aus der Bohrkrone zu lösen und aus dem Inneren der Bohrkrone zu entfernen. Dieses Vorgehen kann unter Umständen sehr mühsam und zeitaufwändig sein. Darüber hinaus kann die Bohrkrone durch die Hammerschläge beschädigt und ihre Lebenszeit verkürzt werden.

Zur Durchführung eines solchen Ausrüttelvorgangs eines Bohrkerns aus der Bohrkrone wird in Werkzeugmaschinen häufig eine mechanische Rutschkupplung eingesetzt. Mechanische Rutschkupplungen können Hilfskräfte und Drehmomentspitzen erzeugen, mit denen der Bohrkern aus der Bohrkrone herausgeschüttelt werden können. Alternativ können diese Hilfskräfte und Drehmomentspitzen dazu verwendet werden, ein verklemmte oder steckengebliebene Bohrkrone aus einem Bohrloch freizurütteln. Im Anschluss an dieses Freirütteln kann dann entweder die die Bohrung fortgeführt oder die Bohrkrone unkompliziert aus dem Bohrloch herausgezogen werden.

Im Zuge der technischen Weiterentwicklung im Bereich der Werkzeugmaschinen besteht allerdings ein Bestreben, keine mechanischen Lösungen für einzelne Anwendungsfälle mehr vorzusehen, sondern stattdessen elektronische und/oder mechatronische Lösungen zum Freirütteln einer Bohrkrone zu verwenden. Beispielsweise sind im Stand der Technik elektronische Rutschkupplungs-Lösungen bekannt, sowie Lösungen zur Regulierung des Drehmoments in der Werkzeugmaschine. Allerdings sind diese elektronischen und/oder mechatronischen Lösungen häufig nicht in der Lage, die oftmals sehr kurzzeitig auftretenden Spitzendrehmomente im Antriebsstrang der Werkzeugmaschine zu begrenzen bzw. sinnvoll einzusetzen. Darüber hinaus kann die Integration einer Rutschkupplung in den Antriebsstrang einer Werkzeugmaschine aufwändig sein, so dass es die Fachwelt begrüßen würde, wenn auf dieses zusätzliche Bauteil verzichtet werden könnte.

Die Aufgabe, die der vorliegenden Erfindung zugrunde liegt, besteht darin, die vorstehend beschriebenen Nachteile des Standes der Technik zu überwinden und ein Verfahren zum Betrieb eines Kernbohrgeräts anzugeben, mit dem das Lösen einer verklemmten Bohrkrone aus einem Bohrloch verbessert werden kann. Darüber hinaus würde es die Fachwelt begrüßen, wenn mit dem Verfahren das Lösen eines Bohrkerns aus einer Bohrkrone vereinfacht und auf eine mechanische Rutschkupplung verzichtet werden könnte. Darüber hinaus soll die bereitzustellende Werkzeugmaschine besonders leicht und kompakt ausgebildet sein, so dass die Handhabung der Werkzeugmaschine erleichtert wird und eine Zeitspanne, die ein Nutzer mit der Werkzeugmaschine zu arbeiten vermag, verlängert werden kann. Ferner soll das Entfernen eines Bohrkerns aus einer Bohrkrone bzw. das Entfernen eines Werkzeugs der Werkzeugmaschine aus einem Bohrloch schneller durchgeführt werden können als bei konventionellen Werkzeugmaschinen, wie sie aus dem Stand der Technik bekannt sind. Ein weiterer Aspekt der Erfindung besteht darin, dass eine Werkzeugmaschine, insbesondere ein Kernbohrgerät, zur Durchführung des Verfahrens angegeben wird.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Werkzeugmaschine mit einem Werkzeug vorgesehen, wobei das Werkzeug mit Hilfe einer Werkzeugaufnahme mit der Werkzeugmaschine verbindbar ist. Die Werkzeugmaschine weist einen Motor zur Erzeugung eines Drehmoments auf, wobei das Drehmoment mit Hilfe eines Antriebsstrangs der Werkzeugmaschine an die Werkzeugaufnahme übertragbar ist und in dem Antriebsstrang der Werkzeugmaschine ein Spiel vorgesehen ist. Ein Sollstrom für den Motors der Werkzeugmaschine ist mit sich regelmäßig abwechselndem Vorzeichen vorgebbar, wobei eine Frequenz für den Wechsel des Vorzeichens des Motorsollstroms in einem Bereich von 7 bis 60 Hertz liegt. Durch die Vorsehung des Spiels und die Vorgabe des Motorsollstroms mit unterschiedlichen Vorzeichen können besonders hohe Drehmomente, insbesondere Drehmomentspitzen, von dem Motor der Werkzeugmaschine in Richtung der Werkzeugaufnahme übertragen werden. Dadurch wird eine Rüttelbewegung an der Werkzeugaufnahme erzeugt, mit der ein verklemmtes Werkzeug aus einem Bohrloch gelöst werden kann. Die vorgeschlagene Werkzeugmaschine kommt vorteilhafterweise ohne mechanische Rutschkupplung aus, so dass eine besonders kompakte und leichte Werkzeugmaschine bereitgestellt werden kann, die eine komfortable Bedienung und Handhabung gewährleistet. Es hat sich gezeigt, dass es mit der vorgeschlagenen Werkzeugmaschine sowohl möglich ist, das Befreien eines eingeklemmten Werkzeugs aus einem Bohrloch zu erleichtern, als auch einen Bohrkern aus einem als Bohrkrone ausgebildeten Werkzeug zu vereinfachen und deutlich schneller zu gestalten. Denn durch die Rüttelbewegung, die durch die Motorsollstromvorgabe mit wechselndem Vorzeichen hervorgerufen wird, kann zum einen eine Bohrkrone aus einem Bohrloch freigerüttelt werden, wenn sich die Bohrkrone zuvor in dem Bohrloch verklemmt hatte. Zum anderen kann die Rüttelbewegung dazu verwendet werden, nach erledigtem Bohrvorgang einen aus einem Untergrund herausgeschnittenen Bohrkern aus dem Inneren der Bohrkrone zu lösen, um einen neuen Bohrvorgang mit einer «leeren» Bohrkrone starten zu können. Somit dient die Erfindung vorteilhafterweise mehreren Zwecken und verbessert unterschiedliche Funktionen der vorgeschlagenen Werkzeugmaschine.

Die Formulierung des «regelmäßig abwechselnden Vorzeichens» umfasst im Sinne der Erfindung bevorzugt solchen Situationen, bei denen sich die Drehrichtung des Motors von der einen Drehrichtung in die andere Drehrichtung ändert. Eine solche Drehrichtungsänderung kann im Kontext der vorliegenden Erfindung dadurch erreicht werden, dass der Motor-Sollstrom in regelmäßigen Abständen sein Vorzeichen von «plus» zu «minus» oder von «minus» zu «plus» ändert. Die Formulierung des «regelmäßig abwechselnden Vorzeichens» umfasst aber vorzugsweise auch solche Situationen, bei denen der Motor der Werkzeugmaschine nicht vollständig seine Drehrichtung ändert, sondern in denen beispielsweise eine Motor-Sollstrom-Vorgabe mit einem positiven Vorzeichen zu «null» wird und damit kein Vorzeichen aufweist oder in denen eine Motor-Sollstrom-Vorgabe mit einem negativen Vorzeichen zu «null» wird. Damit umfasst der Schutzbereich der Erfindung vorzugsweise auch solche Situationen, in denen eine von «null» verschiedene Motor-Sollstrom-Vorgabe auf «null» und damit auf den neutralen Wert zurückgeht. Vorzugsweise fallen die im Folgenden genannten Vorzeichen-Abfolgen unter den Schutzbereich der vorliegenden Erfindung: (+/-/+/-/+), (+/0/+/0/+), (-/0/-/0/-) oder (+/0/-/0/+/0/-).

Es ist im Sinne der Erfindung bevorzugt, dass der Antriebsstrang der Werkzeugmaschine einen Motor, ein Getriebe und ein Ritzel aufweist, wobei das Ritzel dazu eingerichtet ist, ein größeres Zahnrad anzutreiben, wobei das größere Zahnrad auf einer Abtriebswelle angeordnet ist, wobei die Abtriebswelle das Werkzeug der Werkzeugmaschine antreibt. Der Antrieb des Werkzeugs der Werkzeugmaschine erfolgt vorzugsweise dadurch, dass ein Drehmoment vom Motor der Werkzeugmaschine auf das Werkzeug übertragen wird, wobei das Drehmoment zunächst insbesondere auf die Werkzeugaufnahme der Werkzeugmaschine übertragen wird. Bei dem Ritzel handelt es sich vorzugsweise um ein erstes Zahnrad, das dazu eingerichtet ist, ein zweites Zahnrad anzutreiben, wobei das erste Zahnrad etwas kleiner ausgebildet ist als das zweite Zahnrad. Die Zahnräder gehören in dem Sinne zusammen, dass das erste Zahnrad das zweite Zahnrad antreibt. Das zweite oder größere Zahnrad kann im Sinne der Erfindung bevorzugt auch als "Grossrad" bezeichnet werden.

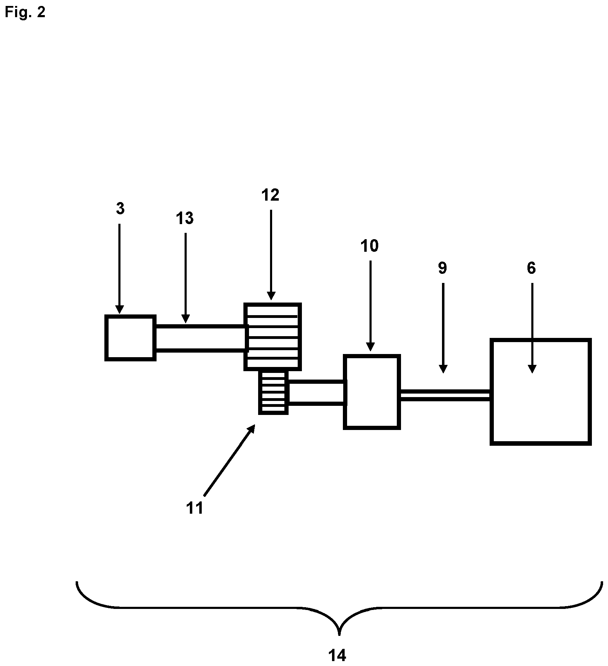

Es ist im Sinne der Erfindung bevorzugt, dass das größere Zahnrad und die Abtriebswelle als Komponenten des Antriebsstrangs bezeichnet werden, obwohl sie technisch strenggenommen den Abtriebsstrang der Werkzeugmaschine bilden (siehe Fig. 2). Der Begriff "Antriebsstrang" bezeichnet im Sinne der Erfindung als Oberbegriff sowohl den Antriebs-, als auch den Abtriebsstrang der Werkzeugmaschine. Es ist somit im Sinne der Erfindung bevorzugt, dass der Antriebsstrang sowohl den Motor der Werkzeugmaschine, das Getriebe und das Ritzel auf der einen Seite (Antriebsseite), als auch das größere Zahnrad und die Abtriebswelle auf der anderen Seite (Abtriebsseite) umfasst. Mithin können Komponenten-Paare aus diesen beiden Teilgruppen, die nebeneinander liegen, "benachbarte Komponenten des Antriebsstrangs" im Sinne der Erfindung sein.

Es ist im Sinne der Erfindung bevorzugt, dass das Spiel zwischen benachbarten Komponenten im Antriebsstrang der Werkzeugmaschine vorgesehen ist. Es kann im Sinne der Erfindung aber auch bevorzugt sein, dass das Spiel innerhalb einer Komponente des Antriebsstrangs der Werkzeugmaschine realisiert wird.

Es ist im Sinne der Erfindung ganz besonders bevorzugt, dass das größere Zahnrad und die Abtriebswelle die "benachbarten Komponenten des Antriebsstrangs" im Sinne der Erfindung darstellen. Es ist im Sinne der Erfindung bevorzugt, dass zwischen dem Grossrad und der Abtriebswelle eine Drehmomentmitnahme erfolgt. Das bedeutet im Sinne der Erfindung bevorzugt, dass mit Hilfe des Grossrads ein Drehmoment von der Antriebswelle der Werkzeugmaschine auf die Abtriebswelle übertragen wird. Es ist im Sinne der Erfindung bevorzugt, dass die Drehmomentmitnahme zwischen den benachbarten Komponenten des Antriebsstrangs der Werkzeugmaschine, vorzugsweise Grossrad und Abtriebswelle, den Einbau eines Steifigkeitssprungs und/oder eines Spiels in den Antriebsstrang ermöglicht. Der Steifigkeitssprung kann beispielsweise durch die Vorsehung von einer oder mehreren Drehfedern ermöglicht werden.

Der Begriff "Steifigkeitssprung" bedeutet im Sinne der Erfindung bevorzugt, dass zwei Komponenten des Antriebsstrangs unterschiedliche Steifigkeiten aufweisen. Dadurch liegt ein großer Steifigkeitsunterschied zwischen diesen Komponenten des Antriebsstrangs vor, der im Sinne der Erfindung als "Steifigkeitssprung" bezeichnet wird. Beispielsweise kann eine Steifigkeit des Antriebsstrangs in einem Bereich von 1.000 bis 100.000 Nm/rad liegen, während eine Steifigkeit einer Motorwelle auf der Antriebsseite des Antriebsstrangs in einem Bereich von größer als 50 Nm/rad liegt. Die Abkürzung «Nm» steht für die Einheit «Newtonmeter», die eine Einheit für das Drehmoment bzw. die mechanische Arbeit oder Energie ist. Die Abkürzung «rad» steht für die Einheit «Radiant» des Winkel- oder Bogenmaßes. Es ist im Sinne der Erfindung bevorzugt, dass die Steifigkeit des Antriebsstrangs vorzugsweise von einer Steifigkeit der Abtriebswelle dominiert wird, wobei die Abtriebswelle - wie oben ausgeführt - im Kontext der vorliegenden Erfindung vorzugsweise als Bestandteil des Antriebsstrangs betrachtet wird. Die Motorwelle der Werkzeugmaschine kann im Sinne der Erfindung auch als Rotorwelle oder Antriebswelle bezeichnet werden. Es ist im Sinne der Erfindung bevorzugt, dass die Rotorwelle deutlich dünner ausgebildet ist als die Abtriebswelle der Werkzeugmaschine.

Es ist im Sinne der Erfindung bevorzugt, dass die Antriebswelle und/oder die Abtriebswelle im Antriebsstrang durch eine spezifische Steifigkeit gekennzeichnet sind, wobei die Steifigkeit der Wellen vorzugsweise in der Einheit Nm/rad angegeben wird. Vorzugsweise ist die Gesamtsteifigkeit des Antriebsstrangs kleiner als die kleinste Einzelsteifigkeit einer Komponente innerhalb des Antriebsstrangs. Dies ergibt sich daraus, dass die Gesamtsteifigkeit des Antriebsstrang durch eine gedankliche Reihenschaltung von Drehfedern ermittelt werden kann. Es ist im Sinne der Erfindung bevorzugt, dass der Steifigkeitssprung durch das Spiel, welches bei wechselnder Drehrichtung des Motors in Kombination mit einem Drehanschlag erzeugt wird, entsteht. Das bedeutet im Sinne der Erfindung bevorzugt, dass der Steifigkeitssprung vorzugsweise durch die Vorsehung des Drehanschlags bewirkt werden kann. Die rasch wechselnde Drehrichtung des Motors kann zu einer Be- und Entlastung der Komponenten des Antriebsstrangs führen.

Der Begriff «Spiel» bezeichnet als Oberbegriff im Sinne der Erfindung zwei unterschiedliche Situationen: zum einen ein Spiel im konventionellen Wortsinn, bei dem sich vorzugsweise zwei benachbarte Komponenten des Antriebsstrangs um einige Grad verkippt zueinander bewegen können. Ein besonders bevorzugter Spielwinkel kann im Sinne der Erfindung bei ca. 6 Grad liegen. Ein solches konventionelles Spiel kann beispielweise zwischen der Abtriebswelle und der Motorwelle oder im Bereich der Zahnräder des Antriebsstrangs vorliegen. Zum anderen kann der Oberbegriff «Spiel» einen Steifigkeitssprung oder Steifigkeitsunterscheid zwischen den Steifigkeiten zweier benachbarter Komponenten des Antriebsstrangs bezeichnen. Ein solcher Steifigkeitssprung kann beispielsweise zwischen den Steifigkeiten der Abtriebswelle (großer Durchmesser, große Steifigkeit) und der Motorwelle (kleinerer Durchmesser, kleine Steifigkeit) vorliegen, wobei der Begriff «Steifigkeit» im Sinne der Erfindung vorzugsweise eine Torsionssteifigkeit bezeichnet. Die Erfindung betrifft somit vorzugsweise eine Werkzeugmaschine mit einem Antriebsstrang, der aufgrund seiner Ausgestaltung einen schnellen Richtungswechsel des Motorstromsollwertes umsetzen kann, ohne dass es zu Beschädigungen kommt. Um dieses Ziel zu erfüllen, hat sich gezeigt, dass ein Antriebsstrang mit einem Spiel besonders gut geeignet ist.

Es ist im Sinne der Erfindung bevorzugt, dass das Spiel im Kontext der vorliegenden Erfindung ein Drehspiel im Antriebsstrang der Werkzeugmaschine ist. Es ist im Sinne der Erfindung ganz besonders bevorzugt, dass das Drehspiel auf der Abtriebswelle des Antriebsstrangs der Werkzeugmaschine auftritt. Das bedeutet im Sinne der Erfindung bevorzugt, dass sich die Rotorwelle um einen Spiel-Winkel drehen kann, ohne dass eine Drehung der Abtriebswelle bewirkt wird. Dieser Spiel-Winkel entspricht vorzugsweise einem Produkt des Spiels und der Übersetzung der Werkzeugmaschine. Der Spiel-Winkel kann beispielsweise zwischen 5 und 10 Grad liegen, beispielsweise bei 6 Grad, 7 Grad, 8 Grad, 9 Grad oder jedem Zwischenwert. Wenn die Rotorwelle bei ihrer Drehung an dem oben erwähnten Drehanschlag anschlägt, kann das Spiel vorteilhafterweise durch Umkehr der Drehrichtung in umgekehrter Richtung genutzt werden. Es ist im Sinne der Erfindung ganz besonders bevorzugt, das Spiel zwischen Abtriebswelle und Zahnrad der Abtriebswelle vorzusehen.

Es ist im Sinne der Erfindung bevorzugt, dass das Spiel in einem Bereich von 2 bis 10 Grad, bevorzugt in einem Bereich von 3 bis 9 Grad, besonders bevorzugt in einem Bereich von 5 bis 7 Grad und am meisten bevorzugt bei 6 Grad liegt. Ein Wert von 6 Grad hat sich als besonders vorteilhaft erwiesen, um ein besonders unkompliziertes Lösen von verklemmten Werkzeugen, beispielsweise Bohrkronen, mit unterschiedlichen Durchmessern zu ermöglichen. Beispielsweise können die Bohrkronen, die im Kontext der vorliegenden Erfindung verwendet werden, einen Durchmesser in einem Bereich von 12 bis 500 mm aufweisen. Darüber hinaus hat sich gezeigt, dass ein Spiel von ca. 6 Grad auch das Herauslösen eines Bohrkerns aus einer Bohrkrone besonders gut ermöglicht. Es ist im Sinne der Erfindung bevorzugt, dass die Werkzeugmaschine ein Kernbohrgerät und das Werkzeug eine Bohrkrone ist, wobei ein Durchmesser der Bohrkrone in einem Bereich von 12 bis 500 mm liegt. In einer besonders bevorzugten Ausgestaltung der Erfindung liegt der Durchmesser der Bohrkrone in einem Bereich von 20 bis 250 mm.

Im Kontext der vorliegenden Erfindung wird ein Motorsollstrom vorgegeben, wobei der Motorsollstrom eine Frequenz in einem Bereich von 7 bis 60 Hertz liegt. Die Frequenz beschreibt vorzugsweise die Frequenz, mit der sich ein Vorzeichen des vorgegebenen Motorstroms ändert («Vorzeichen-Wechsel-Frequenz»). Das Vorzeichen des Motorstroms ändert sich, um die Werkzeugaufnahme zu Bewegungen in unterschiedlichen Drehrichtungen zu veranlassen. Bei einer verklemmten Bohrkrone kann sich die Bohrkrone nicht bewegen, erfährt aber das übertragene Drehmoment. Durch die Übertragung eines Drehmoments mit unterschiedlichen Drehrichtungen ergibt sich eine Rüttelbewegung, die auf die Bohrkrone wirkt und die - wie sich gezeigt hat - dazu in der Lage ist, die Bohrkrone aus einer Verklemmung zu befreien. Insbesondere die Verwendung eines bürstenlosen Motors im Kontext der vorliegenden Erfindung ermöglicht ein solches schnelles Wechseln der Stromvorgabe, die die beschriebenen Drehmoment-Oszillationen bewirken kann. Insbesondere können durch den schnellen Wechsel in Bezug auf Vorzeichen der Stromvorgabe für den Motor der Werkzeugmaschine Drehmomentspitzen in den Antriebsstrang eingebracht werden, die zu der Rüttelbewegung zum Lösen des Werkzeugs der Werkzeugmaschine führen. Es ist im Sinne der Erfindung bevorzugt, dass der Motor der Werkzeugmaschine ein bürstenloser Gleichstrommotor ist.

Es ist im Sinne der Erfindung bevorzugt, dass das Motormoment dem Motorstrom sehr schnell folgt. Das bedeutet im Sinne der Erfindung bevorzugt, dass sich eine Drehrichtung des Motors besonders schnell einer geänderten Vorzeichen-Vorgabe für den Motorstrom anpasst, d.h. dass sich eine Drehrichtung des Motors besonders schnell entsprechend einer geänderten Vorgabe für das Vorzeichen des Motorstroms ändert.

Neben dem Motor, dem Getriebe und dem Ritzel kann der Antriebsstrang darüber hinaus eine Spindel aufweisen. Die Spindel umfasst vorzugsweise die Abtriebswelle. Es ist im Sinne der Erfindung bevorzugt, dass an der Spindel der Werkzeugmaschine das Motormoment multipliziert mit der Übersetzung n des Getriebes des Antriebsstrangs ankommt. Wenn beispielsweise der Motor der Werkzeugmaschine in der Lage ist, ein Spitzen-Drehmoment von 5 Nm zu erzeugen und das Getriebe der Werkzeugmaschine eine Übersetzung n=6 aufweist, so ergibt sich ein maximales Motormoment von ca. 30 Nm, also das Produkt aus maximalem Drehmoment und Übersetzung. Ein solcher Wert ist üblicherweise zu gering, um ein verklemmtes Werkzeug der Werkzeugmaschine freizurütteln. Die Erfinder haben erkannt, dass durch die zusätzliche Vorsehung eines Spiels im Antriebsstrang der Werkzeugmaschine dieses maximale Motormoment erheblich erhöht werden kann, so dass es durch die Vorsehung des zusätzlichen Spiels im Antriebsstrang ein Motormoment erzeugt werden kann, dass vorteilhafterweise ausreicht, um ein verklemmtes Werkzeug der Werkzeugmaschine freizurütteln. Ein solches Freirütteln kann vorteilhafterweise dazu verwendet werden, um eine verklemmte Bohrkrone aus einem Bohrloch zu lösen bzw. zu entfernen.

Darüber hinaus kann mit der Erfindung vorteilhafterweise ein Verfahren zur Entfernung eines verklemmten Bohrkerns aus der Bohrkrone bereitgestellt werden. Zu solchen Verklemmungen des Bohrkerns innerhalb des Bohrkrone kann es beispielsweise aufgrund von Ablagerungen zwischen Bohrkrone und Bohrkern kommen, wobei solche Ablagerungen häufig während eines Bohrprozesses bzw. Bohrvorgangs entstehen. Die Ablagerungen können dazu führen, dass ein Entfernen oder Lösen des Bohrkerns aus der Bohrkrone erschwert wird. Im Kontext der vorliegenden Erfindung wird nun das sich regelmäßig ändernde Vorzeichen des Motorsollstroms und die dadurch hervorgerufene rasche Änderung der Drehrichtung der Bohrkrone ausgenutzt, um das Lösen eines verklemmten Bohrkerns aus einer Bohrkrone zu unterstützen. Mit anderen Worten kann die oszillatorische Drehbewegung der Bohrkrone dazu verwendet werden, einen verklemmten Bohrkern aus der Bohrkrone zu lösen. Die oszillatorische Drehbewegung der Bohrkrone kann vorzugsweise auch als Rütteln bezeichnet werden. Es hat sich gezeigt, dass durch die oszillatorischen Drehbewegungen der Bohrkrone die Ablagerungen des Bohrguts, die zu dem Verklemmen des Bohrkerns in der Bohrkrone führen, gelöst werden können. Dadurch entstehen innerhalb der Bohrkrone Freiräume, die ein Lösen des Bohrkerns aus der Bohrkrone der Werkzeugmaschine ermöglichen bzw. erleichtern.

Für das Lösen des Bohrkerns aus der Bohrkrone hat es sich als besonders vorteilhaft erwiesen, wenn eine Frequenz für den Wechsel des Vorzeichens des Motorsollstroms bei ca. 20 Hertz liegt. Die Oszillationsbewegung kann sich aus einem Rechtslauf und einem Linkslauf zusammensetzen, wobei sich eine Aufteilung von ca. 30 % Linkslauf und 70 % Rechtslauf als besonders gut geeignet gezeigt hat, um das Herausschneiden des Bohrkerns aus dem Bohrloch deutlich zu erleichtern. Eine solche Oszillationsbewegung, die sich aus unterschiedlich großen Anteilen »Rechtslauf» und «Linkslauf» zusammensetzt, wird im Sinne der Erfindung bevorzugt als «asymmetrisch zusammengesetzte Bewegung» der Bohrkrone im Bohrloch bezeichnet. Beispielsweise kann bei einer Aufteilung von ca. 30 % Linkslauf und 70 % Rechtslauf ein System aus Kernbohrgerät und Bohrkrone bereitgestellt werden, bei dem sich die Lage der Bohrkrone in Bezug auf die Seitenwände des Bohrlochs während des Betriebs leicht verändert. Tests haben gezeigt, dass auf diese Weise die gesamte Wandung des Bohrlochs besonders gleichmäßig Kontakt mit der Bohrkrone hat.

Vorzugsweise betrifft die Erfindung ein Verfahren zum Lösen eines Bohrkerns aus einer Bohrkrone einer Werkzeugmaschine. Bei dem Verfahren wird eine Werkzeugmaschine bereitgestellt, wobei in dem in dem Antriebsstrang der Werkzeugmaschine ein Spiel vorgesehen ist. Wenn nach Betrieb der Werkzeugmaschine, d.h. nachdem mit der Werkzeugmaschine ein Bohrkern aus einem Untergrund herausgeschnitten wurde, ein Bohrkern oder ein Bohrkernrest in der Bohrkrone zurückbleibt, der sich nicht ohne Weiteres lösen läßt, kann die Bohrkrone mit einer durch einen schnellen Richtungswechsel gekennzeichneten Drehbewegung hin- und herbewegt werden. Die Drehbewegung mit dem schnellen Richtungswechsel kann insbesondere dadurch erreicht werden, dass dem Motor der Werkzeugmaschine eine Motorsollstrom vorgegeben wird, wobei sich das Vorzeichen des Motorsollstroms mit einer Frequenz in einem Bereich von 7 bis 60 Hertz ändert. Es ist im Kontext des Verfahrens zum Lösen eines Bohrkerns aus einer Bohrkrone besonders bevorzugt, dass sich die Bohrkrone mit einer Frequenz von 10 bis 30 Hz, am meisten bevorzugt mit einer Frequenz von ca. 20 Hz hin- und herdreht. Dies kann insbesondere durch eine Übertragung des Drehmoments vom Motor auf die Bohrkrone erreicht werden, wobei bei der Übertragung des Drehmoments vom Motor auf die Bohrkrone das sich rasch ändernde Vorzeichen des Motorsollstroms vorteilhafterweise zu einer oszillatorischen Drehbewegung der Bohrkrone der Werkzeugmaschine führt, mit der ein verklemmter Bohrkern aus der Bohrkrone gelöst werden kann.

Die Frequenz, mit der sich das Vorzeichen der Motorsollstromvorgabe ändert, liegt im Kontext der vorliegenden Erfindung in einem Bereich von 7 bis 60 Hz. Es kann aber im Sinne der Erfindung auch bevorzugt sein, dass die Grenzen innerhalb dieses Bereiches einstellbar ausgebildet sind. Beispielsweise kann ein Betriebsparameter der Werkzeugmaschine ermittelt werden, wobei eine untere und/oder eine obere Grenze des Bereiches für die Vorzeichen-Wechsel-Frequenz in Abhängigkeit von diesem Betriebsparameter eingestellt werden können. Bei dem Betriebsparameter kann es sich beispielsweise um eine Gehäuse-Reaktion der Werkzeugmaschine handeln. Es ist im Sinne der Erfindung bevorzugt, dass eine untere Grenze des Frequenzbereiches in Abhängigkeit von einer Hand-Arm-Eigenfrequenz eines Nutzers der Werkzeugmaschine ausgewählt wird. Beispielsweise kann die untere Grenze des Frequenzbereiches dem Doppelten der Hand-Arm-Eigenfrequenz des Nutzers entsprechen, um eine sichere und schonende Bedienung der Werkzeugmaschine für den Nutzer zu gewährleisten. Vorzugsweise liegt die untere Grenze des Frequenzbereiches bei etwa 7 Hertz, also bei einer Frequenz von 7 Änderungen des Vorzeichens des Motorsollstroms pro Sekunde. Die Einheit Hertz steht vorzugsweise für die Einheit «1/s» und wird mit der Abkürzung «Hz» abgekürzt. Dementsprechend steht eine Vorzeichen-Wechsel-Frequenz von 60 Hz für 60 Änderungen des Vorzeichens des Motorsollstroms pro Sekunde.

Es ist im Sinne der Erfindung bevorzugt, dass der Motorsollstrom eine im Wesentlichen rechteckige oder sinusförmige Form aufweist. Vorzugsweise kann der Motorsollstrom einen Offset aufweisen. Der regelmäßige Vorzeichenwechsel des Motorsollstroms führt vorteilhafterweise zu wechselseitigen Drehmomentspitzen, während der Offset zu einem Haltemoment führen kann, das vom Nutzer der Werkzeugmaschine aufgebracht werden muss. Es ist im Sinne der Erfindung bevorzugt, dass ein Verhältnis zwischen einem Drehmoment des Motors («Motormoment») und einer Trägheit des Motors größer als 1.000 Nm/(kg·m²) ist. Das Haltemoment für den Nutzer der Werkzeugmaschine ergibt sich vorzugsweise aus dem zeitlichen Mittelwert des Motormomentes bzw. des Gehäusereaktionsmomentes. Dadurch wird dem Nutzer vorteilhafterweise das Gefühl gegeben, dass er die Werkzeugmaschine noch halten muss.

Es ist im Sinne der Erfindung bevorzugt, dass das Getriebe der Werkzeugmaschine einstufig oder mehrstufig ausgebildet ist. Vorzugsweise kann das Getriebe eine Übersetzung in einem Bereich von n=1 bis n=30 bereitstellen, wobei der Wert von n=1 vorzugsweise einem Direktantrieb entspricht. Dabei ist die Übersetzung des Getriebes der Werkzeugmaschine nicht auf ganzzahlige Werte beschränkt, sondern es können auch rationale Zahlen, wie beispielsweise 4,4 oder 6,4, vorkommen. Es ist im Sinne der Erfindung ganz besonders bevorzugt, dass eine Übersetzung des Getriebes der Werkzeugmaschine in einem Bereich von 1 bis 30 liegt, bevorzugt in einem Bereich von 3 bis 10 und besonders bevorzugt in einem Bereich von 4 bis 7.

Es ist im Sinne der Erfindung bevorzugt, dass eine Steifigkeit des Antriebsstrangs in einem Bereich von 1.000 bis 100.000 Nm/rad liegt. Dabei wird die Steifigkeit des Antriebsstrangs der Werkzeugmaschine vorzugsweise von einer Steifigkeit der Abtriebswelle dominiert, wobei die Abtriebswelle - wie oben ausgeführt - im Kontext der vorliegenden Erfindung vorzugsweise als Bestandteil des Antriebsstrangs betrachtet wird. Es ist im Sinne der Erfindung bevorzugt, dass die Abtriebswelle der Werkzeugmaschine einen größeren Durchmesser aufweist als die Motorwelle, so dass die Steifigkeit der Abtriebswelle deutlich größer ist als die Steifigkeit der Motorwelle. Es ist im Sinne der Erfindung bevorzugt, dass die Steifigkeit der Motorwelle in einem Bereich von größer als 50 Nm/rad liegt. Somit ergibt sich vorzugsweise, dass ein Verhältnis zwischen der Steifigkeit des Antriebsstrangs der Werkzeugmaschine und der Steifigkeit der Motorwelle der Werkzeugmaschine in einem Bereich von 20 bis 2.000 liegt. Mit anderen Worten kann die Steifigkeit des Antriebsstrangs bzw. der Abtriebswelle mit einem Faktor 20 bis 2.000 größer sein als die Steifigkeit der Rotorwelle der Werkzeugmaschine.

Es ist im Sinne der Erfindung bevorzugt, dass es sich bei den genannten Steifigkeiten um Torsionssteifigkeiten des Antriebsstrangs, der Abtriebswelle bzw. der Motorwelle handelt.

In einem zweiten Aspekt betrifft die Erfindung ein Verfahren zum Betrieb einer Werkzeugmaschine. Die für die Werkzeugmaschine eingeführten Begriffe, Definitionen und technischen Vorteile gelten vorzugsweise für das Betriebsverfahren für die Werkzeugmaschine analog. Das Betriebsverfahren ist durch folgende Verfahrensschritte gekennzeichnet:
a) Bereitstellung der Werkzeugmaschine, wobei in dem in dem Antriebsstrang der Werkzeugmaschine ein Spiel vorgesehen ist,
b) Vorgabe eines Motorsollstroms mit einer Vorzeichen-Wechsel-Frequenz in einem Bereich von 7 bis 60 Hertz,
c) Übertragung eines Drehmoments mit sich in regelmäßigen Abständen änderndem Vorzeichen gemäß der vorgegeben Vorzeichen-Wechsel-Frequenz von dem Motor an die Werkzeugaufnahme der Werkzeugmaschine, so dass ein verklemmtes Werkzeug aus einem Bohrloch gelöst werden kann.

Die Übertragung des Drehmoments mit sich in regelmäßigen Abständen änderndem Vorzeichen gemäß der vorgegeben Vorzeichen-Wechsel-Frequenz bedeutet im Sinne der Erfindung bevorzugt, dass der Motor sich aufgrund der Vorgabe des Motorsollstroms dreht, und zwar in einer solchen Drehrichtung, die einem Vorzeichen des Motorsollstroms entspricht. Gemäß der vorliegenden Erfindung ändert sich die Vorgabe dieses Vorzeichens des Motorsollstroms regelmäßig, wobei sich die "Regelmäßigkeit" aus der Vorzeichen-Wechsel-Frequenz ergibt. Die Vorzeichen-Wechsel-Frequenz gibt vorzugsweise an, in welchen Zeitabständen sich das Vorzeichen des Motorsollstroms ändert. Der Motor der Werkzeugmaschine folgt dieser geänderten Vorgabe, indem er seine Drehrichtung ändert. Wenn es sich bei dem Motor der Werkzeugmaschine um einen bürstenlosen Gleichstrommotor handelt, kann der Motor der Werkzeugmaschine der geänderten Motorsollstrom-Vorgabe vergleichsweise rasch folgen, so dass die Verwendung eines bürstenlosen Gleichstrommotors im Kontext der vorliegenden Erfindung bevorzugt ist.

Wenn der Motor seine Drehrichtung ändert, überträgt sich diese geänderte Bewegung und die geänderte Richtung des entsprechenden Drehmoments über den Antriebsstrang auf die Werkzeugaufnahme. Wenn das Werkzeug der Werkzeugmaschine nicht verklemmt in einem Bohrloch vorliegt, kann durch die sich schnell ändernden Bewegungen der Bohrkrone eine Rüttelbewegung erzeugt werden, mit der beispielsweise ein Bohrkern, der sich in der Bohrkrone befindet, freigerüttelt und aus der Bohrkrone gelöst werden kann. Wenn die Bohrkrone verklemmt in einem Bohrloch vorliegt, kann mit der Rüttelbewegung die Bohrkrone selbst aus dem Bohrloch freigerüttelt und befreit werden. Mit anderen Worten kann durch die Rüttelbewegungen erreicht werden, dass ein verklemmtes Werkzeug der Werkzeugmaschine aus einem Bohrloch gelöst werden kann. Darüber hinaus kann die Erfindung dafür verwendet werden, dass ein Bohrkern aus der Bohrkrone herausgelöst wird, und dies vorteilhafterweise, ohne dass die Bohrkrone beschädigt wird. Des Weiteren ist für den Herauslösevorgang kein Werkzeug erforderlich, so dass das Herauslösen des Bohrkerns aus der Bohrkrone vorteilhafterweise werkzeuglos erfolgen kann. Es ist im Sinne der Erfindung bevorzugt, dass durch die Änderung des Vorzeichens des Motorsollstrom eine Bewegung des Werkzeugs der Werkzeugmaschine in unterschiedlichen Drehrichtungen bewirkt werden kann, die vorteilhafterweise zum Lösen einer verklemmten Bohrkrone aus einem Bohrloch oder zum Lösen eines Bohrkerns aus der Bohrkrone genutzt werden kann.

Die Vorsehung eines Spiels im Antriebsstrang kann dazu führen, dass die maximalen Drehmomentwerte, die vom Motor auf die Werkzeugaufnahme übertragen werden, erheblich erhöht werden können. Es hat sich gezeigt, dass ein Getriebespiel von beispielsweise 6 Grad dazu beiträgt, dass Drehmomentspitzen beim Oszillieren des Werkzeugs bzw. der Werkzeugaufnahme erzeugt werden können. Tests haben gezeigt, dass bei einem Spiel von 6 Grad die deutlichsten Steigerungen der Drehmomente in einem Bereich für die Vorzeichen-Wechsel-Frequenz von 15 bis 21 Grad erreicht werden können.

Es ist im Sinne der Erfindung besonders bevorzugt, dass das Spiel zwischen benachbarten Komponenten des Antriebsstrangs der Werkzeugmaschine vorgesehen ist. Es kann im Sinne der Erfindung aber auch bevorzugt sein, dass das Spiel innerhalb einer Komponente des Antriebsstrangs der Werkzeugmaschine realisiert wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigt:
- Fig. 1: Ansicht einer beispielhaften bevorzugten Ausführungsform der Werkzeugmaschine
- Fig. 2: Ansicht einer beispielhaften bevorzugten Ausführungsform des Antriebsstrangs

### Ausführungsbeispiel und Figurenbeschreibung:

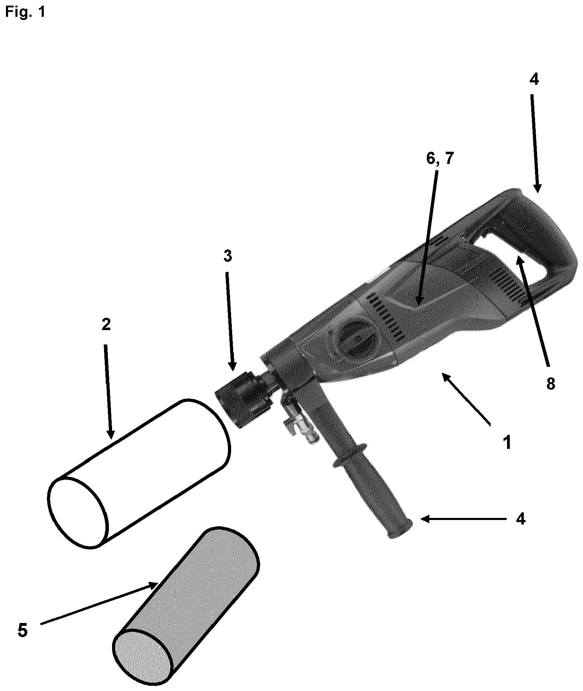

Figur 1 zeigt eine mögliche Ausgestaltung der Erfindung. Insbesondere zeigt Fig. 1 eine Werkzeugmaschine, die als Kernbohrgerät 1 zum Herausschneiden von Bohrkernen 5 aus einem harten Untergrund, wie Beton, Stein oder Mauerwerk ausgebildet ist. Die Werkzeugmaschine 1 kann mit einem Griff 4 von einem Nutzer gehalten und mit Hilfe einer Schaltvorrichtung 8 ein- oder ausgeschaltet werden. Das Werkzeug des Kernbohrgeräts 1 ist eine Bohrkrone 2, in der der Bohrkern 5 während des Schneidevorgangs aufgenommen wird. Die Werkzeugmaschine 1 weist einen Motor 6 auf, der von einer Steuervorrichtung 7 der Werkzeugmaschine 1 Vorgaben zu Größe und Richtung des Motorstroms erhält. Im Kontext der vorgeschlagenen Erfindung wird ein Verfahren zum Betrieb eines Kernbohrgeräts 1 vorgeschlagen, bei dem sich die Vorgabe des Motorstroms und insbesondere seines Vorzeichens regelmäßig ändert. Die Frequenz, mit der diese Änderung erfolgt, wird im Sinne der Erfindung bevorzugt als «Vorzeichen-Wechsel-Frequenz» bezeichnet. Die Vorzeichen-Wechsel-Frequenz liegt erfindungsgemäß in einem Bereich von 7 bis 60 Hz.

Die Werkzeugmaschine 1 umfasst einen Antriebsstrang 14, der den Motor 6, eine Motorwelle 9, ein Getriebe 10 und ein Ritzel 11 aufweist. Das Ritzel 11 wirkt mit einem größeren Zahnrad 12 zusammen, das auf einer Abtriebswelle 13 der Werkzeugmaschine 1 angeordnet vorliegt. Eine mögliche Ausgestaltung des Antriebsstrang 14 wird schematisch in Figur 2 dargestellt. Es ist im Sinne der Erfindung bevorzugt, dass das Grossrad 12 und die Abtriebswelle 13 als Bestandteile des Antriebsstrangs 14 der Werkzeugmaschine 1 betrachtet werden. Die Abtriebswelle 13 ist vorzugsweise mit dem Werkzeug 2, insbesondere mit der Werkzeugaufnahme 3 der Werkzeugmaschine 1, verbunden. Im Antriebsstrang 14 der Werkzeugmaschine 1 ist ein Spiel vorgesehen. Der Begriff «Spiel» bezeichnet als Oberbegriff zum einen ein Spiel im konventionellen Wortsinn, bei dem sich zwei benachbarte Komponenten des Antriebsstrangs 14 um einige Grad verkippt zueinander bewegen können. Ein besonders bevorzugter Spielwinkel kann im Sinne der Erfindung bei ca. 6 Grad liegen. Ein solches konventionelles Spiel kann beispielweise zwischen der Abtriebswelle 13 und der Motorwelle 9 oder im Bereich der Zahnräder 11, 12 des Antriebsstrangs 14 vorliegen. Mit anderen Worten kann der Spielwinkel von beispielsweise 6 Grad auf die Spindel 13, die Werkzeugaufnahme 3 oder die Bohrkrone 5 bezogen sein.

Zum anderen kann der Oberbegriff «Spiel» einen Steifigkeitssprung oder Steifigkeitsunterscheid zwischen den Steifigkeiten zweier benachbarter Komponenten des Antriebsstrangs bezeichnen, der beispielsweise zwischen der Abtriebswelle 13 und der Motorwelle 9 vorliegt.

### Bezugszeichenliste

- 1: Kernbohrgerät
- 2: Bohrkrone
- 3: Werkzeugaufnahme
- 4: Griff
- 5: Bohrkern
- 6: Motor des Kembohrgeräts
- 7: Steuervorrichtung des Kernbohrgeräts
- 8: Schaltvorrichtung
- 9: Motorwelle
- 10: Getriebe
- 11: Ritzel
- 12: Grossrad
- 13: Abtriebswelle
- 14: Antriebsstrang

## Patentansprüche

1. Werkzeugmaschine (1) mit einem Werkzeug (2), wobei das Werkzeug (2) mit Hilfe einer Werkzeugaufnahme (3) mit der Werkzeugmaschine (1) verbindbar ist, wobei die Werkzeugmaschine (1) einen Motor (6) zur Erzeugung eines Drehmoments aufweist, wobei das Drehmoment mit Hilfe eines Antriebsstrangs (14) der Werkzeugmaschine (1) an die Werkzeugaufnahme (3) übertragbar ist,
**dadurch gekennzeichnet, dass**
in dem Antriebsstrang (14) ein Spiel vorgesehen ist und wobei eine Sollstrom für den Motor (6) der Werkzeugmaschine (1) mit sich regelmäßig abwechselndem Vorzeichen vorgebbar ist, wobei eine Vorzeichen-Wechsel-Frequenz des Motorsollstroms in einem Bereich von 7 bis 60 Hertz liegt.

2. Werkzeugmaschine (1) nach Anspruch 1,
**dadurch gekennzeichnet, dass**
das Spiel in einem Bereich von 2 bis 10 Grad, bevorzugt in einem Bereich von 3 bis 9 Grad, besonders bevorzugt in einem Bereich von 5 bis 7 Grad und am meisten bevorzugt bei 6 Grad liegt.

3. Werkzeugmaschine (1) nach Anspruch 1 oder 2,
**dadurch gekennzeichnet, dass**
das Spiel zwischen benachbarten Komponenten des Antriebsstrangs (14) der Werkzeugmaschine (1) vorgesehen ist.

4. Werkzeugmaschine (1) nach einem der vorherigen Ansprüche,
**dadurch gekennzeichnet, dass**
der Motorsollstrom eine im Wesentlichen rechteckige oder sinusförmige Form aufweist.

5. Werkzeugmaschine (1) nach einem der vorherigen Ansprüche,
**dadurch gekennzeichnet, dass**
der Motorsollstrom ein Offset aufweist.

6. Werkzeugmaschine (1) nach einem der vorherigen Ansprüche,
**dadurch gekennzeichnet,**
**dass** eine Gesamtsteifigkeit des Antriebsstrangs (14) kleiner ist als eine kleinste Einzelsteifigkeit einer Komponente des Antriebsstrangs (14),
**dass** durch das Spiel ein Steifigkeitssprung erzeugbar ist und/oder dass der Begriff Steifigkeit eine Torsionssteifigkeit bezeichnet.

7. Werkzeugmaschine (1) nach einem der vorherigen Ansprüche,
**dadurch gekennzeichnet, dass**
der Motor (6) der Werkzeugmaschine (1) ein bürstenloser Gleichstrommotor ist.

8. Werkzeugmaschine (1) nach einem der vorherigen Ansprüche,
**dadurch gekennzeichnet, dass**
ein Verhältnis zwischen einem Drehmoment des Motors (6) und einer Trägheit des Motors (6) größer als 1.000 Nm/(kg·m²) ist.

9. Werkzeugmaschine (1) nach einem der vorherigen Ansprüche,
**dadurch gekennzeichnet, dass**
der Antriebsstrang (14) den Motor (6), ein Getriebe (10) und ein Ritzel (11) aufweist, wobei das Ritzel (11) dazu eingerichtet ist, ein größeres Zahnrad (12) anzutreiben, wobei das größere Zahnrad (12) auf einer Abtriebswelle (13) angeordnet ist, wobei die Abtriebswelle (13) dazu eingerichtet ist, das Werkzeug (2) der Werkzeugmaschine (10) anzutreiben.

10. Werkzeugmaschine (1) nach Anspruch 9
**dadurch gekennzeichnet, dass**
das Getriebe (10) einstufig oder mehrstufig ausgebildet ist.

11. Werkzeugmaschine (1) nach einem der vorherigen Ansprüche,
**dadurch gekennzeichnet, dass**
eine Steifigkeit des Antriebsstrangs (14) in einem Bereich von 1.000 bis 100.000 Nm/rad liegt.

12. Werkzeugmaschine (1) nach einem der vorherigen Ansprüche,
**dadurch gekennzeichnet, dass**
der Antriebsstrang (14) der Werkzeugmaschine (1) eine Motorwelle (9) umfasst, wobei eine Steifigkeit der Motorwelle (9) in einem Bereich von größer als 50 Nm/rad liegt.

13. Werkzeugmaschine (1) nach einem der vorherigen Ansprüche,
**dadurch gekennzeichnet, dass**
das Spiel ein Drehspiel im Antriebsstrang (14) der Werkzeugmaschine (1), insbesondere auf der Abtriebswelle (13), ist.

14. Verfahren zum Betrieb der Werkzeugmaschine (1) nach einem der vorhergehenden Ansprüche **gekennzeichnet durch die folgenden Verfahrensschritte:**
a) Bereitstellung der Werkzeugmaschine (1), wobei in dem in dem Antriebsstrang (14) der Werkzeugmaschine (1) ein Spiel vorgesehen ist,
b) Vorgabe eines Motorsollstroms mit einer Vorzeichen-Wechsel-Frequenz in einem Bereich von 7 bis 60 Hertz,
c) Übertragung eines Drehmoments mit sich in regelmäßigen Abständen änderndem Vorzeichen gemäß der vorgegeben Vorzeichen-Wechsel-Frequenz von dem Motor (6) an die Werkzeugaufnahme (3) der Werkzeugmaschine (1), so dass ein verklemmtes Werkzeug (2) aus einem Bohrloch gelöst werden kann.

15. Verfahren nach Anspruch 14,
**dadurch gekennzeichnet, dass**
ein Verhältnis zwischen einer Steifigkeit des Antriebsstrangs (14) der Werkzeugmaschine (1) und einer Motorwelle (9) der Werkzeugmaschine (1) in einem Bereich von 20 bis 2.000 liegt.
